(19) **Europäisches Patentamt**
**European Patent Office**
**Office européen des brevets**

(11) **EP 3 886 051 A1**

(12) **EUROPEAN PATENT APPLICATION**

(43) Date of publication:
**29.09.2021   Bulletin 2021/39**

(51) Int Cl.:
***G06T 15/50*** *(2011.01)*

(21) Application number: **20164989.4**

(22) Date of filing: **23.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SAINT-GOBAIN GLASS FRANCE**
**92400 Courbevoie (FR)**

(72) Inventors:
- HIVET, Romain
  **93400 Saint-Ouen (FR)**
- BERARD, Mathieu
  **75019 Paris (FR)**

(74) Representative: **Saint-Gobain Recherche**
**B.P. 135**
**39, quai Lucien Lefranc**
**93303 Aubervilliers Cedex (FR)**

(54) **METHOD FOR PHYSICALLY BASED RENDERING OF COATED SHEET OF GLASS**

(57)    The present invention pertains to computer implemented methods for physically based rendering of coated sheets of glass. More specifically, the invention relates to a method for physically based rendering of a sheet of glass which comprises an opaque, i.e. non-translucent non-transparent, optionally coloured, layer on one of its main faces. Its allows to render accurately sheet of transparent glass comprising an opaque layer in a realistic way in a 3D virtual scene through the calculation of Lambertian bidirectional reflectance distribution function from diffuse reflection spectrum and the use of said function in a physically based rendering application.

Fig. 2

EP 3 886 051 A1

## Description

### Technical field

The present invention pertains to computer implemented methods for physically based rendering of coated sheets of glass. More specifically, the invention relates to a method for physically based rendering of a sheet of glass which comprises an opaque, i.e. non-translucent non-transparent, optionally coloured, layer on one of its main faces.

Spandrel glasses are sheets of transparent glass comprising an opaque, i.e. non-transparent non-translucent, optionally coloured, layer, e.g. paint, enamel or ceramic frits, on one of their main faces. On building facades, they are usually located between vision glasses, i.e. transparent glasses such as windows glass panes, in order to conceal structural features, e.g. electric wires, slab, plumbing, vent and air-conditioning systems, between columns and floors of buildings. They can be implemented as monolithic or insulated glass panes, the layered surface being the indoor surface, i.e. the surface oriented to the building inside.

Spandrel glasses are generally designed such a way to also achieve some aesthetic vision on the building facades. For example, they can have complementary or contrasting colours in regards to the vision glasses. Spandrel glasses are produced on case-by-case basis depending both on the technical requirements of the building and the aesthetical requirements.

### Background art

It is a known practice to benchmark different kinds of lab scale produced prototypes of spandrel glass in order to find out those that will best fulfil some technical and aesthetical requirements. However, as inside lab lighting conditions are different from those of the outside, the aesthetical effect of a building facade comprising lab selected prototypes can be radically different from what was initially expected when afterwards exposed to the outside lighting. Even when more realistic lighting conditions are used in the lab, unwanted and unexpected scaling up effects can negatively impinge the final aesthetical effect. Consequently, the R&D development based on this approach becomes increasingly time-consuming and costly without guarantee of results.

It is known in the prior art, for example in KR102017075B1, JP2019144791A, CN109685891A, CN107784131A, CN108846220A, EP3104337A1, CA2771504A1, to use virtual renderings or image synthesis to simulate buildings. These methods can possibly be used to simulate spandrel glasses. However, the different features of a virtual scene simulated through these methods are displayed in false or pseudo colours gamut. One is unable to assess the real aesthetical effect of such simulated spandrels.

Alternatively, CN108550178A, CN107451366A, CN109283855A, disclose physically based renderings which render 3D graphics that can more accurately simulate the real world by use of a physical approach in the simulation of light flow onto the features of the virtual scene. Most of them are based on ray tracing method. They also rely on databases containing optical data such as light reflection spectra or refraction indexes, of the materials to be simulated. For spandrel glass, they can exempt from the use of real prototypes and provide a framework for virtual investigation which offers far more possibilities to explore the field of combinations of materials. However, current physically based renderings fail to accurately render the coated sheet of transparent glass in a realistic way as they often rely on inappropriate optical or physical parameters/properties. In particular, sole light reflection spectra cannot correctly account for the optical phenomena occurring in the coated sheet of transparent glass.

### Summary of the invention

Technical problem

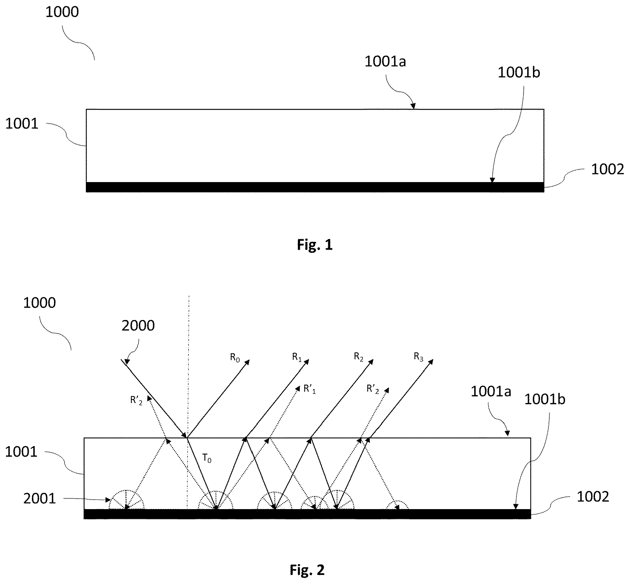

With reference to fig. 1 and 2 which are further described below, light entering into a sheet of glass undergoes multiple reflections and refractions at the glass/atmosphere. If the sheet of glass further comprises an opaque layer, which have different optical properties than those of the glass, multiple reflections and refractions occur at two kinds of interface: the glass/coating and the glass/atmosphere interface.

For a spandrel glass to be correctly simulated, the cumulative effect of these multiple reflection and refraction of specular and/or diffuse components of the light entering into the glass must be rendered.

Solution to problem

The present invention relates to a computer implemented method and a process as described in claims.

With reference to fig. 1 to fig. 3, the method according to the invention is a computer implemented method 3000 for physically based rendering of a sheet 1001 of transparent glass comprising, on one 1001b of its main faces, an opaque layer 1002 which exhibits a diffuse reflection of the visible light, wherein the method uses the diffuse reflection spectrum of the sheet of glass as input data I3001, and provides a physically based rendering of said sheet of transparent glass as output data O3001, and wherein the method comprises the following steps:

(a) the calculation S3001 of the Lambertian bidirectional reflectance distribution function (BRDF) D3001 of the sheet 1001 of transparent glass from the diffuse reflection spectrum 13001 ;
(b) the use S3002 of a physically based rendering application in which the sheet 1001 of glass is rendered as Lambertian material with the bidirectional reflectance distribution function (BRDF) D3001 calculated in step (a) S3001.

The invention provides numerous benefits and advantages over known methods. In particular, the invention uses the Lambertian BRDF instead of the diffuse reflection spectrum, its allows to render accurately sheet of transparent glass comprising an opaque layer in a realistic way in a 3D virtual scene. More particularly, it is ideally suited to render a sheet 1001 of glass, comprising an opaque layer 1002 which is an organic and/or organic layer, such as an organic paint, a ceramic frit, a glass frit and/or an enamel. It also advantageous for the physically based rendering of sheet 1001 of transparent glass that comprises another features, for example when it further comprises a thin films coating sandwiched, or deposited, between the surface of the glass sheet 1001 and the opaque layer 1002. As the method works for rendering spandrel glass, it also works to render accurately any kind of sheet of transparent glass comprising an opaque layer such as a glass furnace door or an automotive glazing comprising an opaque layer.

The method of the invention can also be used to render different kind glazing comprising more than one sheet of transparent glass comprising an opaque layer on one of its main face. For example, such glazing can be double or third insulated glazing, and laminated glazing in which a polymeric interlayer is sandwiched between two sheets of transparent glass.

According to an aspect of the invention, there is provided a computer implemented method (3000), wherein the opaque layer further exhibits a specular reflection of the visible light, and wherein the method further use the specular reflection spectrum of the sheet (1001) of transparent glass as input data (13001), and wherein the method comprises, before the step (a), a step (a') of calculation of the specular bidirectional reflectance distribution function of the sheet of glass from the specular reflection spectra, and wherein, in step (a), the Lambertian bidirectional reflectance distribution function is calculated by taking into account the specular bidirectional reflectance distribution function calculated at step (a'), and wherein, in step (b), the sheet of glass is rendered as material with a bidirectional reflectance distribution function being the sum of the Lambertian bidirectional reflectance distribution function and the specular bidirectional reflectance distribution function calculated at steps (a) and (a') respectively.

By combining the Lambertian BRDF and the specular BRDF, this aspect of the invention is advantageous to improve the rendering when the opaque layer has also a non-negligible specular behaviour and/or the sheet of glass comprises another features which such behaviour. An example of features is a specular thin films coating sandwiched between the surface of the glass sheet and the opaque layer.

According to another aspect of the invention, there is provided a data processing system, a computer program and a computer readable medium comprising instructions to cause a computer to carry out a method 3000 according to the invention.

According to an aspect of the invention, there is provided a process for physically based rendering of a sheet 1001 of transparent glass comprising, on one of its main faces, an opaque layer 1002 which exhibits a diffuse reflection of the visible light, wherein the process comprises the acquisition of the diffuse reflection spectrum of the sheet of glass by an adapted spectrometer, and implement the method 3000 of the invention.

## Brief description of the drawings

Fig. 1 is a schematic representation of cross-sectional view of a sheet of transparent glass comprising, on one of its main faces, an opaque layer.
Fig. 2 is a schematic representation of the multiple reflections/refractions of light falling on a sheet of glass of fig. 1.
Fig. 3 is a data flow diagram of the computer implemented method of the present invention.
Fig. 4 is a plot of the diffuse reflection spectra and the Lambertian BRDF of a sheet of transparent comprising an enamel as opaque layer.
Fig. 5 is a plot the diffuse reflection spectra and the Lambertian BRDF of a sheet of transparent comprising an enamel as opaque layer and a thin films coating deposited between the layer and the sheet of glass.

**Description of embodiments**

Fig. 1 depicts a sheet 1001 of transparent glass comprising an opaque layer 1002 deposited on one of its main faces 1001a, 1001b.

In the context of the invention, a transparent glass means a glass through which at least part of electromagnetic radiation is transmitted in the visible spectrum so that the shape and possibly some details of an object which is observed through that said glass can be distinguished.

A transparent glass can be organic or mineral glass. Examples of mineral glass are sodalime glass, aluminosilicate glass or borosilicate glass. Examples of organic glass are poly(methyl methacrylate) (PMMA) or polycarbonate (PC) polymers.

The opaque layer 1002 is a non-transparent non-translucent layer, i.e. layer such as the electromagnetic radiation transmitted in the visible spectrum does not allow to distinguish the shape and details of an object which is observed through it. Most of spandrel glasses comprise an opaque layer 1002 that absorbs all the radiation in the visible spectrum.

Fig. 2 illustrates the multiple reflections/refractions of light 2000 falling on a main face 1001a of and entering in a sheet 1001 of transparent glass comprising an opaque layer 1001. For sake of simplicity and comprehensiveness, only few reflections/refractions are represented on the figure.

At the interface glass/air interface, corresponding to the main face 1001a on the figure, part Ro of the falling light ray 2000 is reflected outside the sheet 1001 of glass. It is called 0-order of specular reflection.

Another part $T_0$ is transmitted through refraction inside the sheet 1001. The transmitted light $T_0$ is then reflected on the opposite face 1001b of the sheet of glass 1001, corresponding to the glass/opaque layer interface. Part of this transmitted light $T_0$ then undergoes multiple specular reflections between the two interfaces, each time producing refracted light, $R_1$, $R_2$, $R_3$, ..., with decreasing intensity and escaping outwards at the air/glass interface. These refracted lights are called respectively first, second, third, ..., nth-order of specular reflection.

Some part of the transmitted light $T_0$ is also diffused at the glass/opaque layer interface, corresponding to main face 1001b, in every direction by half-spheres 2001 on the figure. This diffused light undergoes multiple reflection/refraction at the glass/air interface and multiple diffuse/specular reflection at the glass/opaque layer interface, as schematically represented on the figure. Each time, at the air/glass refracted, refracted light $R'_1$, $R'_2$, $R'_3$, ..., escape the sheet 1001 of transparent glass with decreasing intensity. This refracted light is called respectively first, second, ..., nth-order of refracted diffuse reflection.

The cumulative effect of these multiple reflection and refraction of specular and/or diffuse components of the light entering into the glass must be rendered to correctly simulate a spandrel with a physically based rendering engine.

With reference to fig. 1 to 3, the method of the invention is a computer implemented method 3000 for physically based rendering of a sheet 1001 of transparent glass comprising, on one of its main faces 1001b, an opaque layer 1002 which exhibits a diffuse reflection of the visible light, wherein the method uses the diffuse reflection spectrum of the sheet of glass as input data I3001, and provides a physically based rendering of said sheet of transparent glass as output data 03001, and wherein the method comprises the following steps:

(a) the calculation S3001 of the Lambertian bidirectional reflectance distribution function (BRDF) D3001 of the sheet 1001 of glass from the diffuse reflection spectrum 13001 ;
(b) the use S3002 of a physically based rendering application in which the sheet 1001 of glass is rendered as Lambertian material with the bidirectional reflectance distribution function (BRDF) D3001 calculated in step (a) S3001.

An example of calculation of Lambertian BRDF in step (a) that can be computer implemented can be carried out by using a Kubelka-Munk / Saunderson formalism.

The diffuse reflection coefficient can be expressed as:

$$R^{diffuse}(\theta,\lambda) = p_0 \times R_{ext}(\theta,\lambda) + e^{-2d_0\alpha}L(\lambda)T_{ext}(\theta,\lambda)T'^L_{ext}(\theta_{int})\sum_{n=0}^{\infty} p_n\left(e^{-2d_0\alpha}L(\lambda)R'^L_{ext}(\lambda)\right)^n$$

Where $\lambda$ is the wavelength and $\theta$ the incident angle of the incident light on the face 1001a, $R_{ext}(\theta,\lambda)$ and $T_{ext}(\theta,\lambda)$ are respectively the reflection and transmission coefficients of light at the glass/air interface 1001a, $d_0$ is the thickness and $\alpha$ the absorbance of the sheet 1001 of transparent glass, and $L(\lambda)$ is the Lambertian BRDF, and $R_{ext}(\theta,\lambda)$ and $T_{ext}(\theta,\lambda)$ are respectively are respectively the hemispherical reflection and transmission coefficients of light at the glass/air interface 1001a calculated with the following formulas:

$$T_{ext}'^{L}(\lambda) = \int_{0}^{\pi/2} T_{ext}'(\theta_{int}, \lambda) \sin(2\theta) \, d\theta$$

$$R_{ext}'^{L}(\lambda) = \int_{0}^{\pi/2} R_{ext}'(\theta_{int}, \lambda) \sin(2\theta) \, d\theta$$

$p_0,...,p_n$ are coefficients representing the amount of light collected for each order, 0 to $n^{th}$, of diffuse reflection by a given measuring instrument, e.g. a spectrometer, used to measure the diffuse reflection spectra of the sheet of transparent glass comprising the opaque layer. The values of these coefficient depends on the capabilities of the measuring instrument.

For an instrument which is able to collect all the diffused light, $p_n = 1 \; \forall n$, and the above formula can be simplified to get $L(\lambda)$:

$$L(\lambda) = \frac{R^{diffuse}(\theta,\lambda) - R_{ext}(\theta,\lambda)}{e^{-2d_0\alpha}\left(\left(R^{diffuse}(\theta,\lambda) - R_{ext}(\theta,\lambda)\right)R_{ext}'^{L}(\lambda) + T_{ext}(\theta,\lambda)T_{ext}'^{L}(\theta_{int})\right)}$$

Once calculated from the diffuse reflection spectra, $L(\lambda)$ can be used in step (b) as Lambertian BRDF.

In some spandrel glasses, the opaque layer 1002 can also show a non-negligible specular reflection which has to be considered to physically based render it realistically in a 3D virtual scene. The diffuse reflection spectra provided as input in the method may then contain mostly specular component of the reflection which have to be first processed to get the Lambertian BRDF.

In this respect, according to an embodiment of the invention, it is provided a computer implemented method 3000 wherein the opaque layer 1002 further exhibits a specular reflection of the visible light, and wherein the method further uses the specular reflection spectra of the sheet 1001 of transparent glass as input data I3001, and wherein the method comprises, before the step (a), a step (a') of calculation of the specular bidirectional reflectance distribution function of the sheet of glass from the specular reflection spectra, and wherein, in step (a), the Lambertian bidirectional reflectance distribution function is calculated by taking into account the specular bidirectional reflectance distribution function calculated at step (a'), and wherein, in step (b), the sheet of glass is rendered as material with a bidirectional reflectance distribution function being the sum of the Lambertian bidirectional reflectance distribution function and the specular bidirectional reflectance distribution function calculated at steps (a) and (a') respectively.

In most cases, the specular part of the reflected light on the sheet of transparent glass constitutes the major part of reflection spectra so that in step (a') the specular bidirectional reflectance distribution function of the sheet of glass can be calculated from the specular reflection spectrum in which the contribution of the diffuse reflection in the specular spectra is neglected.

An example of calculation of the specular BRDF in step (a') which can be computer implemented can be carried out by using a Kubelka-Munk / Saunderson formalism.

The specular reflection coefficient can be expressed as:

$$R^{spec}(\theta, \lambda) = R_{ext}(\theta, \lambda) +$$

$$T_{ext}(\theta, \lambda)T_{ext}'(\theta_{int}, \lambda)R_{int}(\theta_{int}, \lambda)e^{-2d\alpha}\sum_{n=0}^{\infty}\left(e^{-2d\alpha}R_{int}(\theta_{int}, \lambda)R_{ext}'(\theta_{int}, \lambda)\right)^{n}$$

Where $\theta_{int}$ is refraction angle of the incident light at the air/glass interface 1001a calculated according to Snell-Descartes law, $d = d_0/\cos(\theta_{int})$ and $R_{int}(\theta,\lambda)$ is the specular reflection of the opaque layer

$$R_{int}(\theta_{int}, \lambda) = \frac{R^{spec}(\theta,\lambda) - R_{ext}(\theta,\lambda)}{e^{-2d\alpha}\left(\left(R^{spec}(\theta,\lambda) - R_{ext}(\theta,\lambda)\right)R'_{ext}(\theta_{int},\lambda) + T_{ext}(\theta,\lambda)T'_{ext}(\theta_{int})\right)}$$

Once calculated from the specular reflection spectra provided as input, $R_{int}(\theta_{int}, \lambda)$ can be in step (a) to calculate the Lambertian BRDF, $L(\lambda)$, by solving the following equation:

$$R^{diffus}(\theta, \lambda) = p_0 \times R^{spec}(\theta, \lambda) + \frac{T_{ext}(\theta,\lambda)T'^L_{ext}(\lambda)D(\lambda)}{R^L_{int}(\lambda)\left(1-S(\theta,\lambda)\right)} \times \sum_{n=0}^{\infty} p_n\left(S^L(\lambda) + D(\lambda)\right)^n$$

Where is $R^L_{int}(\lambda), D(\lambda), S(\theta, \lambda)$ and $S^L(\lambda)$ are given by the following form

$$R^L_{int}(\lambda) = \int_0^{\pi/2} R_{int}(\theta, \lambda) \sin(2\theta)\, d\theta$$

$$D(\lambda) = e^{-2d_0\alpha} L(\lambda) R'^L_{ext}(\lambda)$$

$$S(\theta, \lambda) = e^{-2d\alpha} R_{int}(\theta_{int}, \lambda) R'_{ext}(\theta_{int}, \lambda)$$

$$S^L(\lambda) = e^{-2d_0\alpha} R^L_{int}(\lambda) R'^L_{ext}(\lambda)$$

Again, for an instrument which is able to collect all the diffused light, $p_n = 1 \ \forall n$, and the above formula can be simplified:

$$L(\lambda) = \frac{1}{e^{-2d_0\alpha}R'^L_{ext}(\lambda)} \frac{\left(1-S^L(\lambda)\right)\left(1-S(\theta,\lambda)\right)\left(R^{diffus}(\theta,\lambda) - R^{spec}(\theta,\lambda)\right)R^L_{int}(\lambda)}{T_{ext}(\theta,\lambda)T'L_{ext}(\lambda) + \left(1-S(\theta,\lambda)\right)\left(R^{diffus}(\theta,\lambda) - R^{spec}(\theta,\lambda)\right)R^L_{int}(\lambda)}$$

Once calculated from the diffuse reflection spectra, $L(\lambda)$ can be used in step (b) as Lambertian BRDF.

According to an embodiment of the invention, it is provided a computer implemented method 3000 wherein in step (a') the specular bidirectional reflectance distribution function of the sheet of glass is calculated from the specular reflection spectra in which the contribution of the diffuse reflection in the specular spectrum is neglected.

The invention is advantageous to physically render a sheet of transparent glass comprising an opaque layer 1002 which is an organic and/or organic layer, such as an organic paint, a ceramic frit, a glass frit and/or an enamel. It also allows the physically based rendering the sheet of transparent glass comprises another features, for example when it further comprises a thin films coating sandwiched, or deposited, between the surface of the sheet 1001 of transparent glass and the opaque layer 1002.

The method allows to render spandrel glass. It is adapted to be used in a physically rendering application of spandrel glasses in a curtain and/or structurally glazed walls of building.

However, the method according to the invention is not limited to the rendering of spandrel glass. It can be as well used to render accurately any kind of accurately sheet of transparent glass comprising an opaque layer such as a glass furnace door or an automotive glazing comprising an opaque layer.

Comparing to the physically based rendering methods described in the prior art, the method of the invention allows to render accurately and in a realistic way a sheet of transparent glass comprising an opaque in a 3D virtual scene. This is due to the use of Lambertian BRDF instead of the diffuse reflection spectra. Lambertian BRDF contains pertinent optical information on the cumulative effect of the multiple reflection and refraction of specular and/or diffuse components of the light entering into a coated sheet of transparent glass to correctly simulate the light flow in a 3D scene comprising that sheet of glass when using a physically based rendering application or engine. Examples of physically based renderer that may be used in step (b) of the method of the invention are Indigo renderer, LuxCoreRender or 3DCoat.

The method of the invention can also be used to render different kind glazing comprising more than one sheet of transparent glass comprising an opaque layer on one of its main face. For example, such glazing can be double or third insulated glazing, and laminated glazing in which a polymeric interlayer is sandwiched between two sheets of transparent glass. For such glazing, the diffuse and specular reflecting spectra provided as input data are diffuse and specular spectra of the glazing from the glass face, i.e. not from the face onto which the opaque layer is coated.

The diffuse and specular spectra provided as input data can be either retrieved from a database of reflecting spectra or collected with an adapted measuring instrument, e.g. spectrometer, before to carry out the method of the invention.

Another aspect of the invention is to provide a data processing system comprising means for carrying out the method according to any of the embodiments described herein. Example of means for carrying out the method is a device which can be instructed to carry out sequences of arithmetic or logical operations automatically to perform tasks or actions. Such device, also called computer, can comprise one or more Central Processing Unit (CPU) and at least a controller device that are adapted to perform those operations. It can further comprise other electronic components like input/output interfaces, non-volatile storages devices, and buses that are communication systems for the data transfer between components inside a computer, or between computers. One of the input/output devices can be user interface for human-machine interaction, for example graphical user interface to display human understandable information.

Another object of the invention is to provide a computer program comprising instructions which, when the program is executed by a computer, cause the computer to carry out the method of the invention according to any embodiments described herein.

Any kind of programming language, either compiled or interpreted, can be used to implement the steps of the method of the invention. The computer program can be part of a software solution, i.e. part of a collection of executable instructions, code, scripts or the like and/or databases.

Another object of the invention is to provide a computer-readable medium comprising instructions which, when executed by a computer, cause the computer to carry out the method according to any of the embodiments described herein.

The computer-readable storage is preferably a non-volatile storage or memory, for example hard disk drive or solid-state drive. The computer-readable storage can be removable storage media or a non-removable storage media as part of a computer.

Alternatively, the computer-readable storage may be a volatile memory inside a removable media. This can ease the deployment of the invention into many production sites.

The computer-readable storage can be part of a computer used as a server from which executable instructions can be downloaded and, when they are executed by a computer, cause the computer to carry out a method for real-time monitoring of thermal anomalies within a furnace according to any of the embodiments described herein.

The method of the invention can advantageously be part of a process for physically based rendering of a sheet of transparent glass comprising, on one of its main faces, an opaque layer.

According to an aspect of the invention, there is provided a process for physically based rendering of a sheet of transparent glass comprising, on one of its main faces, an opaque layer which exhibits a diffuse reflection of the visible light, wherein the process comprises the following steps:

(a) the acquisition of the diffuse reflection spectra of the sheet of glass by an adapted spectrometer;
(b) the use of computer implemented method according to any embodiment described herein, and wherein the method uses the diffuse reflection spectra of the sheet of glass acquired at step (a) as input data.

Further, in details, according to an aspect of the invention, there is provided a process for physically based rendering of a sheet 1001 of transparent glass comprising, on one 1001b of its main faces, an opaque layer 1002 which exhibits a diffuse reflection of the visible light, wherein the process comprises the following steps:

(a) the acquisition of the diffuse reflection spectrum of the sheet of glass by an adapted spectrometer;
(b) the computer implemented calculation of the Lambertian bidirectional reflectance distribution function of the sheet of glass from the diffuse reflection spectrum acquired at step (a) by using a Kubelka-Munk / Saunderson method in which the reflection orders are selected according to the technical limitations of the spectrometer;
(c) the computer implemented use of a physically based rendering application in which the sheet of glass is rendered as Lambertian material with the Lambertian bidirectional reflectance distribution function calculated in step (b).

If the reflection spectra contains specular component of the reflection, there is provided a process wherein the layer further exhibits a specular reflection of the visible light, and wherein the process comprises, before the step (a), a step (a') of acquisition of the specular reflection spectrum of the sheet of glass by an adapted spectrometer, and wherein the process further comprises, between step (a') and step (a), a step (a") of a computer implemented calculation of the specular bidirectional reflectance distribution function of the sheet of glass from the specular reflection spectrum in which the contribution of the diffuse reflection in the specular spectra is neglected ; and wherein, in step (a), the Lambertian bidirectional reflectance distribution function is calculated by taking into account the specular bidirectional reflectance distribution function calculated at step (a'), and wherein, in step (b), the sheet of glass is rendered as material with a bidirectional reflectance distribution function being the sum of the Lambertian bidirectional reflectance distribution function and the specular bidirectional reflectance distribution function calculated at steps (a) and (a") respectively.

It is now provided examples of embodiments of the method of the invention.

In a fist example of embodiment, the method of the invention is used to render a 4-mm thick sheet of soda-lime transparent glass comprising, i.e. coated with, a light diffusing opaque layer of yellow inorganic enamel on one of its main faces.

The diffuse reflection spectrum (no specular) is acquired on the glass side at near-normal (8°) incidence with a Perkin Elmer lambda 950 spectrometer fitted with an integrating sphere. With the geometry of the device used, it is considered that only the two first orders of reflection is sufficient ($p_0 = 0$, $p_1 = p_2 = 1$, $p_{n>2} = 0$).

The acquired spectrum is then provided as input data to the computer implemented method of the invention with the following steps:

> (a) the calculation of the Lambertian BRDF from the provided diffuse reflection spectrum using the Kubelka-Munk / Saunderson approach described above ;
> (b) the use of a physically based rendering application, as Indigo rendered, in which the sheet of glass is rendered as Lambertian material with the BRDF calculated in step (a).

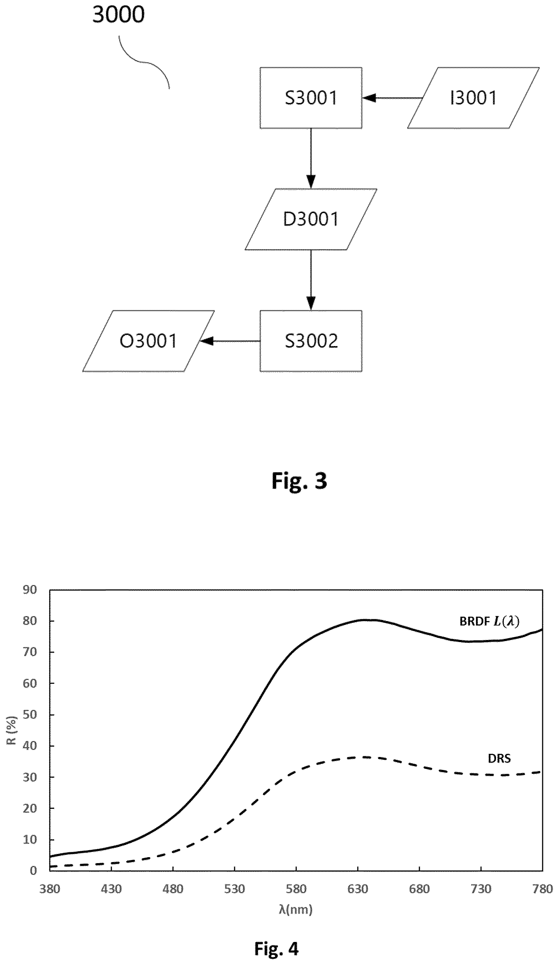

The diffuse reflection spectrum (DRS) and the bidirectional reflectance distribution function (BRDF, $L(\lambda)$) expressed as percentage of reflection (R%) in function of the wavelength ($\lambda$) is provided on the fig. 4. BRDF is more intense than DRS and does not show same curvature. This discrepancy explains why physically based rendering fails to render a sheet of transparent glass comprising on opaque layer when they rely on the diffuse reflection spectrum.

Instead, using the Lambertian BRDF in a physically based rendering allows to simulate said sheet of glass in realistic way as one may see it in the real world or by means of a photographic.

In a second example of embodiment of the invention, the same method as described in the first example of embodiment above has been used to render realistically a double insulated 6/12/6 glazing comprising two 6-mm thick sheets of soda-lime transparent glass, a thin films stack/coating on side 2 (from outside) of the fist sheet and a light diffusing opaque layer of yellow inorganic enamel on side 4 of the second sheet.

In a third example of embodiment of the invention, the method of the invention is used to render a 4-mm thick sheet of soda-lime transparent glass coated on one of its main face with a thin films coating/stack and comprising a light diffusing opaque layer of white inorganic enamel covering said thin films coating/stack. The thin films coating provides a specular reflection at the glass/opaque layer interface.

The specular reflection spectrum has been acquired on the glass side at different angles, e.g. 0°, 20°, 40°, 60°, 80°, with an Elmer lambda 950 spectrometer.

The diffuse reflection spectrum (no specular) has been acquired on the glass side at near-normal (8°) incidence with a Perkin Elmer lambda 950 spectrometer fitted with an integrating sphere. With the geometry of the device used, it is considered that only the 2 first orders of reflection is sufficient ($p_0 = 0$, $p_1 = p_2 = 1$, $p_{n>2} = 0$).

The acquired spectra are then provided as input data to the computer implemented method of the invention with the following steps:

> (a') the calculation of the specular BRDF of the sheet of glass from the specular reflection spectrum with using the Kubelka-Munk / Saunderson approach described above ;
> (a) the calculation of the Lambertian BRDF from the diffuse reflection spectrum taking into account the specular BRDF calculated at step (a') and using the Kubelka-Munk / Saunderson approach described above ;
> (b) the use of a physically based rendering application, as Indigo rendered, in which the sheet of glass is rendered as material with a BRDF being the sum of specular BRDF calculated in step (a') and the Lambertian BRDF calculated at step (a) .

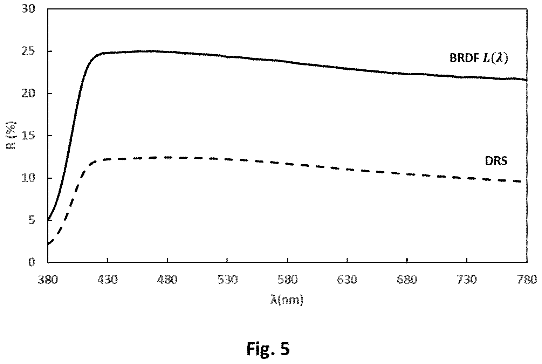

The diffuse reflection spectrum (DRS) and the bidirectional reflectance distribution function (BRDF, $L(\lambda)$) expressed as percentage of reflection (R%) in function of the wavelength ($\lambda$) is provided on the fig. 5. BRDF is more intense than DRS and does not show same curvature. This discrepancy illustrates why physically based rendering fails to render a sheet of transparent glass comprising on opaque layer when they rely on the diffuse reflection spectrum.

Instead, using a BRDF as a sum of specular BRDF calculated in step (a') and the Lambertian BRDF calculated at step (a) in a physically based rendering allows to simulate said sheet of glass in realistic way as one may see it in the real world or by means of a photographic.

In a fourth example of embodiment, the same method as described in the third example of embodiment above has been used to render realistically a double insulated 6/12/6 glazing comprising two 6-mm thick sheets of soda-lime transparent glass, a thin films stack/coating on side 2 (from outside) of the fist sheet and a light diffusing opaque layer of white inorganic enamel covering said thin films coating/stack.

Although the invention has been described in connection with preferred embodiment, it should be understood that various modifications, additions and alterations may be made to the invention by one skilled in the art without departing from the spirit and scope of the invention as defined in the appended claims.

**Claims**

1. A computer implemented method (3000) for physically based rendering of a sheet (1001) of transparent glass comprising, on one (1001b) of its main faces, an opaque layer (1002) which exhibits a diffuse reflection of the visible light, wherein the method uses the diffuse reflection spectrum of the sheet of glass as input data (13001), and provides a physically based rendering of said sheet of transparent glass as output data (03001), and wherein the method comprises the following steps:

   (a) the calculation (S3001) of the Lambertian bidirectional reflectance distribution function (D3001) of the sheet (1001) of transparent glass from the diffuse reflection spectrum (13001) ;
   (b) the use (S3002) of a physically based rendering application in which the sheet (1001) of glass is rendered as Lambertian material with the bidirectional reflectance distribution function (D3001) calculated in step (a) (S3001).

2. A computer implemented method (3000) according to claim 1, wherein the opaque layer (1002) further exhibits a specular reflection of the visible light, and wherein the method further uses the specular reflection spectrum of the sheet (1001) of transparent glass as input data (13001), and wherein the method comprises, before the step (a), a step (a') of calculation of the specular bidirectional reflectance distribution function of the sheet of glass from the specular reflection spectrum, and wherein, in step (a), the Lambertian bidirectional reflectance distribution function is calculated by taking into account the specular bidirectional reflectance distribution function calculated at step (a'), and wherein, in step (b), the sheet of glass is rendered as material with a bidirectional reflectance distribution function being the sum of the Lambertian bidirectional reflectance distribution function and the specular bidirectional reflectance distribution function calculated at steps (a) and (a') respectively.

3. A computer implemented method (3000) according to claim 2, wherein in step (a') the specular bidirectional reflectance distribution function of the sheet of glass is calculated from the specular reflection spectrum in which the contribution of the diffuse reflection in the specular spectra is neglected.

4. A computer implemented invention (3000) according to any one of the claims 1 to 3, wherein the calculation of the Lambertian bidirectional reflectance distribution function in steps (a) and/or (a') is carried out by using a Kubelka-Munk / Saunderson formalism.

5. A computer implemented invention (3000) according to any one of the claims 1 to 4, wherein the opaque layer (1002) is an organic layer and/or an inorganic layer.

6. A computer implemented invention (3000) according to claim 5, wherein the opaque layer (1002) is an organic paint, a ceramic frit, a glass frit and/or an enamel.

7. A computer implemented invention (3000) according to any one of the claims 1 to 6, wherein sheet of transparent glass further comprises a thin films coating, said coating being deposited between the opaque layer (1002) and the sheet (1001) of transparent glass.

8. A computer implemented invention (3000) according to any one of the claims 1 to 7, wherein the sheet (1001) of transparent glass comprising, on one of its main faces, the opaque layer (1002) is a spandrel glass.

9. A data processing system comprising means for carrying out a method (3000) according to any one of the claims 1 to 7.

10. A computer program comprising instructions which, when executed by a computer, cause the computer to carry out a method (3000) according to any one of the claims 1 to 7.

11. A computer readable medium comprising instructions which, when executed by a computer, cause the computer to carry out a method (3000) according to any one of the claims 1 to 7.

12. A process for physically based rendering of a sheet (1001) of transparent glass comprising, on one (1001b) of its main faces, an opaque layer (1002) which exhibits a diffuse reflection of the visible light, wherein the process comprises the following steps:

(a) the acquisition of the diffuse reflection spectra of the sheet of glass by an adapted spectrometer;
(b) the computer implemented calculation of the Lambertian bidirectional reflectance distribution function of the sheet of glass from the diffuse reflection spectra acquired at step (a) by using a Kubelka-Munk / Saunderson method in which the reflection orders are selected according to the technical limitations of the spectrometer;
(c) the computer implemented use of a physically based rendering application in which the sheet of glass is rendered as Lambertian material with the Lambertian bidirectional reflectance distribution function calculated in step (b).

13. A process according to claim 12, wherein the layer further exhibits a specular reflection of the visible light, and wherein the process comprises, before the step (a), a step (a') of acquisition of the specular reflection spectra of the sheet of glass by an adapted spectrometer, and wherein the process further comprises, between step (a') and step (a), a step (a") of a computer implemented calculation of the specular bidirectional reflectance distribution function of the sheet of glass from the specular reflection spectra in which the contribution of the diffuse reflection in the specular spectra is neglected ; and wherein, in step (a), the Lambertian bidirectional reflectance distribution function is calculated by taking into account the specular bidirectional reflectance distribution function calculated at step (a'), and wherein, in step (b), the sheet of glass is rendered as material with a bidirectional reflectance distribution function being the sum of the Lambertian bidirectional reflectance distribution function and the specular bidirectional reflectance distribution function calculated at steps (a) and (a") respectively.

14. Use of a computer implemented method according to any one of the claims 1 to 7 in physically rendering application of spandrel glasses in curtain and/or structurally glazed walls of buildings.

**Fig. 1**

**Fig. 2**

3000

```
                    ┌──────────┐         ┌──────────┐
                    │          │◄────────│          │
                    │  S3001   │         │  I3001   │
                    │          │         │          │
                    └────┬─────┘         └──────────┘
                         │
                         ▼
                    ┌──────────┐
                    │  D3001   │
                    └────┬─────┘
                         │
                         ▼
   ┌──────────┐     ┌──────────┐
   │          │◄────│          │
   │  O3001   │     │  S3002   │
   │          │     │          │
   └──────────┘     └──────────┘
```

**Fig. 3**

**Fig. 4**

**Fig. 5**

Europäisches
Patentamt

European
Patent Office

Office européen
des brevets

# EUROPEAN SEARCH REPORT

Application Number

EP 20 16 4989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ken Uemura: "Development of glass appearance simulation system by highly accurate computer graphyic technology", AGC Research Reports 69, 2019, XP055720990, AGC.COM Retrieved from the Internet: URL:https://www.agc.com/en/innovation/library/detailhtml/1200075_4309.html [retrieved on 2020-08-07] * sections 1, 2 * | 1-14 | INV. G06T15/50 |
| T | & Ken Uemura: "Development of glass appearance simulation system by highly accurate computer graphicic technology", Automatic Google-Translation of XP55720990 into English Language, 7 August 2020 (2020-08-07), XP055720992, AGC.COM Retrieved from the Internet: URL:https://www.agc.com/en/innovation/library/detailhtml/1200075_4309.html [retrieved on 2020-08-07] ----- | | |
| A | WENZEL JAKOB ET AL: "A comprehensive framework for rendering layered materials", ACM TRANSACTIONS ON GRAPHICS, ACM, NY, US, vol. 33, no. 4, 27 July 2014 (2014-07-27), pages 1-14, XP058051954, ISSN: 0730-0301, DOI: 10.1145/2601097.2601139 * sections 2, 3 * ----- | 1-14 | TECHNICAL FIELDS SEARCHED (IPC) G06T |

-/--

The present search report has been drawn up for all claims

| Place of search | Date of completion of the search | Examiner |
|---|---|---|
| Berlin | 10 August 2020 | Bouchaâla, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 20 16 4989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JULIE DORSEY ET AL: "Modeling and rendering of metallic patinas", COMPUTER GRAPHICS PROCEEDINGS. SIGGRAPH '96, ACM, NEW YORK, US, August 1996 (1996-08), pages 387-396, XP058220117, DOI: 10.1145/237170.237278 ISBN: 978-0-89791-746-9 * abstract * | 1-14 | |
| A | CRAIG DONNER ET AL: "Light diffusion in multi-layered translucent materials", ACM TRANSACTIONS ON GRAPHICS, ACM, NY, US, vol. 24, no. 3, July 2005 (2005-07), pages 1032-1039, XP058365733, ISSN: 0730-0301, DOI: 10.1145/1073204.1073308 * abstract * | 1-14 | |

TECHNICAL FIELDS
SEARCHED        (IPC)

The present search report has been drawn up for all claims

| Place of search | Date of completion of the search | Examiner |
|---|---|---|
| Berlin | 10 August 2020 | Bouchaâla, Nicolas |

EPO FORM 1503 03.82 (P04C01)

**EP 3 886 051 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102017075 B1
- JP 2019144791 A
- CN 109685891 A
- CN 107784131 A
- CN 108846220 A
- EP 3104337 A1
- CA 2771504 A1
- CN 108550178 A
- CN 107451366 A
- CN 109283855 A